# EUROPEAN PATENT APPLICATION

(11) **EP 2 325 840 A1**
(43) Date of publication of application: **25.05.2011**
(21) Application number: 09306125.7
(22) Date of filing: 23.11.2009
(51) Int. Cl.: G11B 7/24, G11B 7/243, G11B 7/257

(54) **Optical storage medium comprising an active layer designed as an anti-reflective layer**

(71) Applicant: Thomson Licensing, 92130 Issy-les-Moulineaux (FR)
(72) Inventor: Knittel, Joachim, 78532 Tuttlingen (DE)
(74) Representative: Arnold, Klaus-Peter

(57) **Abstract**

The optical storage medium comprises a substrate layer (2), a data layer (3) with data arranged in tracks on the substrate layer (2), a thermal layer (4a) and a nonlinear layer (4b) disposed on the data layer (3), wherein the nonlinear layer (4b) comprises a super-resolution material having an increased reflectivity when irradiated with a laser beam, and wherein the thermal layer (4a) and the nonlinear layer (4b) constitute an active layer (4) being designed as an anti-reflective layer. The optical storage medium is in particular essentially transparent for light intensities being below a super-resolution threshold of the super-resolution material and has a low reflectivity factor for reducing noise and crosstalk.

## Description

### TECHNICAL FIELD OF THE INVENTION

The present invention relates to an optical storage medium comprising a substrate layer, a data layer and a nonlinear layer with a super-resolution structure arranged above the data layer. The data layer comprises in particular pits and lands having a size above an optical resolution limit and pits and lands having a size below the optical resolution limit of a pickup for reading of the data arranged on the data layer.

### BACKGROUND OF THE INVENTION

Optical storage media are media in which data are stored in an optically readable manner, for example by means of a laser and an optical detector, for example a photo detector, being integrated within a pickup. The detector is used for detecting reflected light of the laser beam when reading data on the storage medium. In the meanwhile a large variety of optical storage media are known, which are operated with different laser wavelength, and which have different sizes for providing storage capacities from below one Gigabyte up to 50 Gigabyte (GB). The formats include read-only formats such as Audio CD and Video DVD, write-once optical media such as CD-R and DVD-R, DVD+R, as well as rewritable formats like CD-RW, DVD-RW and DVD+RW. Digital data are stored on these media along tracks in one or more layers of the media.

The storage medium with the highest data capacity is at present the Blu-Ray disc (BD), which allows to store up to about 50 GB on a dual layer disc. For reading and writing of a Blu-Ray disc an optical pickup with a laser wavelength of 405 nm and a numerical aperture of 0,85 is used. On the Blu-Ray disc a track pitch of 320 nm and a mark length from 2T to 8T or 9T is used, where T is the channel bit length and wherein 2T corresponds with a minimum mark length of 138, 149 or 160 nm.

The diffraction limit of optical instruments as described by the Abbe theory is about lambda/2NA, which is 238nm for a Blu-Ray type pickup having a laser wavelength lambda=405nm and a numerical aperture NA=0,85. For the optical resolution limit of a pickup for the read out of the high frequency (HF) data signal of a Blu-Ray disc, a higher resolution can be obtained when the laser beam moves over the pits and lands of a track on the Blu-Ray disc. Very small amplitude changes can be detected by using a sensitive signal detection, which allows to detect pits with a Blu-Ray type pickup having a size of about 120nm corresponding with lambda/4NA.

New optical storage media with a super-resolution structure offer the possibility to increase the data density of the optical storage medium by a factor of two to four in one dimension as compared with the Blu-Ray disc. This is possible by including a nonlinear layer, which is placed above a data layer of the optical storage medium, and which significantly reduces the effective size of a light spot used for reading from or writing to the optical storage medium. The nonlinear layer can be understood as a mask layer because it is arranged above the data layer and for some specific materials only the high intensity center part of a laser beam can penetrate the mask layer. Further, semiconductor materials can be used as a nonlinear layer, e.g. InSb, which show a higher reflectivity in the center part of the focused laser beam, and which center reflectivity is dependent on the pit structure of the corresponding data layer. Therefore, the super-resolution effect allows to record and read data stored in marks of an optical disc, which have a size below the optical resolution limit of lambda/4NA of a corresponding optical pickup.

The nonlinear layer is often called a super-resolution near-field structure (Super-RENS) layer because it is assumed that for specific materials, the optical effect of reducing the effective spot size of the laser beam is based on a near-field interaction between the marks and spaces of the data layer and the nonlinear layer. Super-RENS optical discs comprising a super resolution near-field structure are known which use a metal oxide, a polymer compound or a phase-change layer comprising a GeSbTe or a AgInSbTe as a non-linear layer.

### BRIEF SUMMARY OF THE INVENTION

The optical storage medium comprises a substrate layer, a data layer with data arranged in tracks on the substrate layer, a thermal layer and a nonlinear layer disposed on the data layer, wherein the thermal layer and the nonlinear layer constitute an active layer representing an anti-reflective layer. The nonlinear layer comprises a super-resolution material having an increased reflectivity when irradiated with a laser beam. The optical storage medium is in particular essentially transparent for light intensities being below a super-resolution threshold of the super-resolution material.

The optical storage medium particularly does not comprise a reflective layer and has a low reflectivity factor therefore for light intensities being below the super resolution threshold of the super resolution material. The super resolution material comprises for example a semiconductor material, including for example InSb, which shows an increased reflectivity when irradiated with a laser beam.

For reading of the data of the optical storage medium, a pickup is used which includes a laser providing a laser beam being focused by an objective lens onto a focus spot on the data layer. The laser beam has a light intensity, which is adjusted such that only in a small center area of the focus spot, the threshold of the nonlinear layer for providing the super-resolution effect is exceeded, but not for the outside area of the focus spot. The pits and lands having a size below the optical resolution limit of lambda/4NA of the pickup are for example 2T and 3T pits and lands. These pits and lands, here called super-resolution pits and lands, provide only very small data signals with regard to the data signals of the larger pits and lands. The amplitude of the data signal of the super-resolution pits and lands depends in particular on the size of the center area of the focus spot.

Reflected light from the outside area of the focus spot does not contribute to the data signal of the super-resolution pits. If the center area is much smaller than the outside area, the reflected light intensity from the outside area will be much stronger than the reflected light of the center area and because reflected light from the outside area is also sensitive to adjacent tracks, a significant amount of crosstalk from adjacent tracks is provided by the outside beam, in particular if a very small track pitch is used.

By using an optical storage medium, which is essentially transparent for the laser light impinging on the outside area of the focus spot, crosstalk from the adjacent tracks and noise from the land areas between the tracks can be essentially avoided, or at least significantly reduced. A reduced track pitch can be used for the optical storage medium therefore being even below the diffraction limit of lambda/2NA of a pickup for reading of the data, which allows a push-pull tracking without any modification of the pickup.

### SHORT DESCRIPTION OF THE DRAWINGS

Preferred embodiments of the invention are explained in more detail below by way of example with reference to schematic drawings, which show:
- Fig. 1: an optical storage medium with a layer stack in a sectional view comprising a substrate, a data layer and an active layer,
- Fig. 2: the function of the active layer of the optical storage medium of figure 1 when irradiated with a laser beam,
- Fig. 3: the optical storage medium of figure 1, comprising an active layer with two thermal layers and a nonlinear layer,
- Fig. 4: measured reflectivity values in dependency of the incident laser power of an optical disc comprising an InSb layer as the nonlinear layer,
- Fig. 5: simulation results for an optical storage medium comprising an active layer with an InSb nonlinear layer, and
- Fig. 6: simulation results for an optical storage medium comprising an active layer with a phase change nonlinear layer.

### DETAILED DESCRIPTION OF PREFERRED EMBODIMENTS

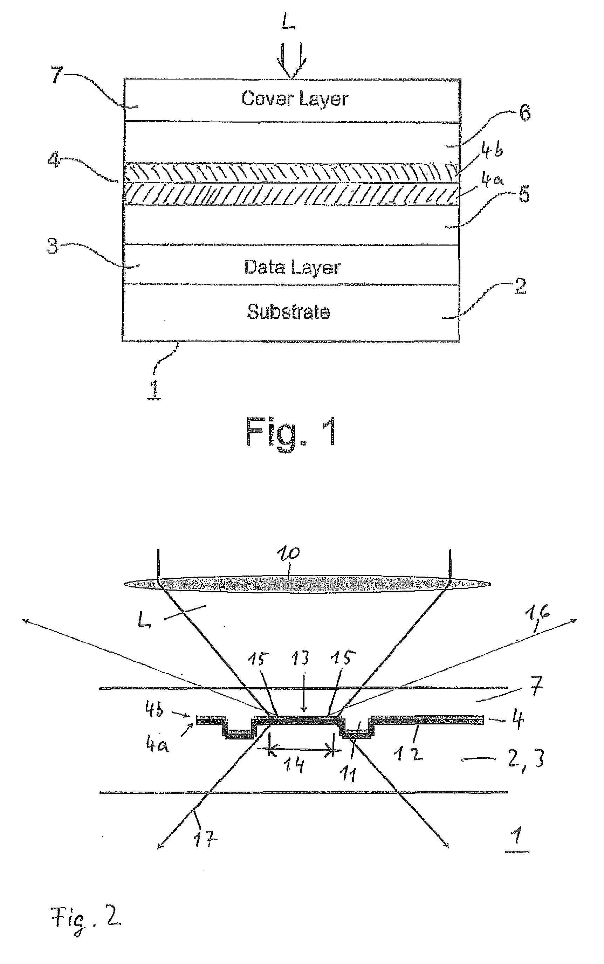

In Fig. 1 an optical storage medium 1 is shown in a cross section in a simplified manner. The optical storage medium 1 is for example a read-only (ROM) optical storage disc and comprises a substrate layer 2 on which an data layer 3 is arranged. The data layer 3 has a data structure consisting of marks and spaces arranged in essentially parallel tracks. For a ROM disc, the marks and spaces consist of pits and lands, the pits being molded or embossed on the surface of the substrate layer 2 for representing the data layer 3.

Above the data layer 3 an active layer 4 is arranged for providing a super-resolution effect. The active layer 4 comprises in particular at least a first thermal layer 4a and a nonlinear layer 4b, the nonlinear layer 4b including a material provided as a super-resolution structure having an increased reflectivity when irradiated with a laser beam. The nonlinear layer 4b provides an increased resolution for a pickup for reading the data of the optical storage medium 1 and the material included is for example a super-resolution near-field structure (Super-RENS) for providing the super-resolution effect. The thermal layer 4a is comprises advantageously a dielectric layer, but can be also a thin metallic layer with a low absorption coefficient.

As a further layer, a cover layer 7 is disposed as a protective layer above the active layer 4. The optical storage medium 1 may comprise in addition further layers, for example a dielectric layer 5 arranged between the active layer 4 and the data layer 3 and/or a dielectric layer 6 arranged between the active layer 4 and the cover layer 7. The dielectric layers 5, 6 have a refractive index being essentially below the refractive index of the thermal layer 4a and may be similar to the refractive indexes of the substrate layer 3 and/or the cover layer 7. For reading the data of the data layer 3, a laser beam L generated by a corresponding pickup is applied in this embodiment from the top of the storage medium 1, penetrating first the cover layer 7.

The active layer 4 is designed as an antireflective layer, for which the reflectivity factor is minimized with regard to the wavelength of the laser beam L. It is known that for transparent layers having an effective optical thickness of lambda/4n, n being the refractive index of the layer and lambda a wavelength of the laser beam L, the reflections of the upper surface and of the lower surface of the layer cancel for that wavelength. This is due to a phase shift of lambda/2 between the reflected light of the upper and the lower surface, which leads to a destructive interference. To constitute an antireflective layer having a low reflectivity factor and a high transmission, the thermal layer 4a and the nonlinear layer 4b should have the same or essentially the same refractive index. The difference between both refractive indexes should be smaller than 10% for example, or at least smaller than 25%. In a preferred embodiment, the reflectivity factor of the optical storage medium is below 10% for light intensities being below the super-resolution threshold of the super-resolution material.

In a further aspect of the invention, the optical storage medium 1 is designed as an essentially transparent optical disc for light intensities being below the threshold for the super-resolution effect of the material used for the nonlinear layer, and has for example a transparency of at least 50%. The material of the nonlinear layer 4b in particular has an increased reflectivity when irradiated with a light intensity, which is above the threshold for providing the super-resolution effect. The optical storage medium 1 has advantageously no reflective layer, as used in essentially all commercially available read-only or recordable optical discs. A reflective layer inhibits essentially any light transmission and is included usually to increase the reflected light intensity for providing a higher amplitude of the data signal.

In particular the real part of the refractive index of the thermal layer 4a and of the nonlinear layer 4b should be nearly equal, so that both layers appear as a single layer 4 for the laser wavelength. The imaginary part of the refractive index of both layers should be as small as possible, to improve the functionality of the active layer 4.

The operation of the optical storage medium 1 is now explained with regard to figure 2, which shows a read-only optical storage medium 1 having a substrate 2, on which a data layer 3 is provided having pits 11 and lands 12 being arranged as tracks on the data layer 3. The data layer 3 is covered with an active layer 4 in accordance with the optical storage medium 1 of Fig. 1, comprising in this embodiment a thermal layer 4a deposited on the data layer 3 and a nonlinear layer 4b deposited on the thermal layer 4a.

For reading of the data of the optical storage medium 1, a pickup comprising an objective lens 10 moves along the tracks of the optical storage medium 1. The pickup includes a laser, which provides a laser beam L being focused to a spot 14 on the data layer 3 by the objective lens 5. The laser beam L has a light intensity, which is adjusted such that only in a small center area 13 of the focussed spot 14, the threshold of the nonlinear layer 4b for providing the super-resolution effect is exceeded, but not for an outside area 15 of the spot 14. The center area 13 of the nonlinear layer 4b has an increased reflectivity therefore, and light 16 is reflected under a wide angle due to the diffraction effect and is at least partly collected by the objective lens 5.

When optical storage medium 1 is rotating, the focussed spot 14 with the center area 13 moves along a track of the storage medium 1 and the reflected light intensity as received by the pickup is modulated by the pits and lands of the track, because the nonlinear layer 4b is sensitive to the pits being arranged as holes below the nonlinear layer 4b on the substrate layer 2 and therefore, the reflected light as received by the pickup is modulated by the pit and land data structure of the optical storage medium 1. The optical storage medium 1 is in particular designed for providing a high storage capacity by including pits having a size being below the optical resolution limit of lambda/4NA of the pickup, e.g. using a pit/land data structure having 2T and/or 3T pits and lands with a size below the optical resolution limit.

For an increased data capacity, the optical storage medium 1 uses a very small track pitch between adjacent tracks on the optical storage medium 1, which is in particular below the diffraction limit of lambda/2NA of a corresponding pickup for reading of the data. Because of the high transparency of the optical storage medium 1, crosstalk from neighbouring tracks and noise from reflected light not contributing to the data signal is considerably reduced. The incident light of the laser beam L not hitting the center area 13 is transmitted through the optical storage medium. In particular also the incident light of the outside area 15 of the spot 14 not contributing to the data signal is transmitted through the optical storage medium 1 because of the comparatively low reflectivity of the nonlinear layer 4a for light intensities being below the super-resolution threshold of the super-resolution material. The transmission factor for the transmitted light 17 is therefore high because of the low reflectivity and low absorption of the optical storage medium.

The optical storage medium 1 has advantageously a transmission factor of at least 50%. By using in addition an anti-reflective coating, a transmission of close to 100% could be reached for the laser beam L impinging on the optical storage medium 1, and if the refractive indexes of both layers of the active layer 4 are perfectly matched. But defocused light reflected from the cover layer 7 is less relevant because only little impinges on the detector. Also manufacturing tolerances may reduce the transmission factor. The optical storage medium 1 may be designed even to provide a defined amount of reflected light for the pickup, e.g. to allow an improved generation of a focus error signal for focus regulation of the pickup.

In a further embodiment of the invention, the two layers 4a, 4b of the optical storage medium of figure 2 are exchanged in that first the nonlinear layer 4b is disposed on the data layer 3 of the substrate layer 2 and then the thermal layer 4a on the nonlinear layer 4b.

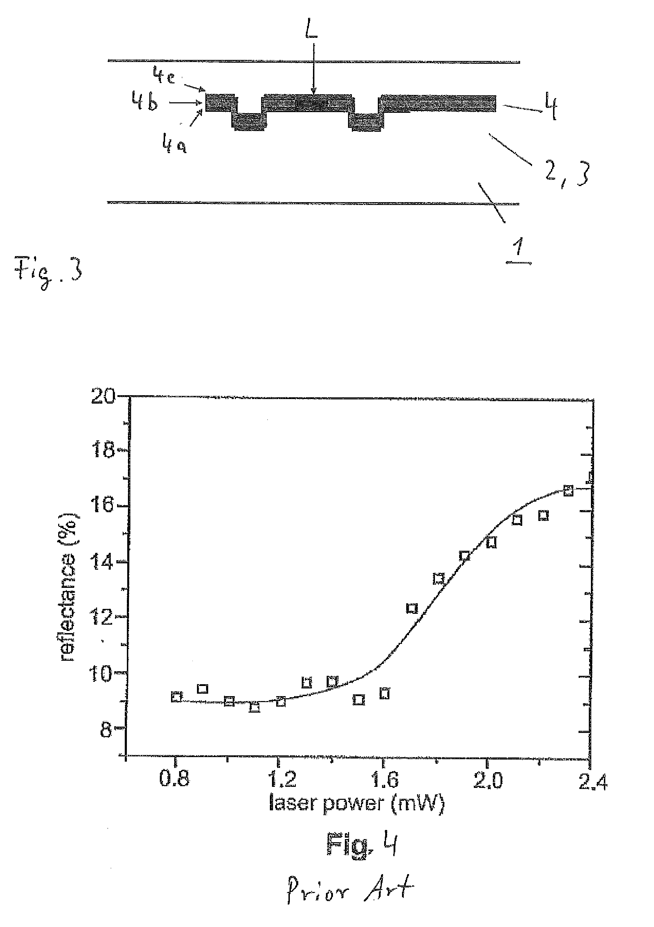

In a further embodiment, the optical storage medium 1 comprises an active layer 4 having a thermal layer 4a disposed on a data layer 3, as arranged on a substrate layer 2, a nonlinear layer 4b disposed on the thermal layer 4a and a second thermal layer 4c being disposed on the nonlinear layer 4b, as shown in figure 3. The thermal layers 4a, 4c are for example dielectric layers or metallic layers. Further, the optical storage medium 1 of figure 3 may comprise additional layers in correspondence with the optical storage medium 1 of figure 1.

The optical storage medium 1 is in particular an optical disc having outside dimensions similar to DVDs and CDs. The substrate 2 and the cover layer 7 may consist of a plastic material, as known from DVDs and CDs, having a refractive index of about 1,5. The layers of the storage medium 1 are arranged as a layer stack, as indicated in figure 1. The dielectric layers 5, 6 comprise for example the material ZnS-SiO₂.

A preferred material for the super-resolution structure of the nonlinear layer 4b is for example an InSb alloy. An optical storage medium comprising InSb as a super-resolution layer shows an increase in reflectivity, when an irradiating laser power is increased to values being above 1,6 mW, as shown for example in Fig. 4. This can be explained by transitions of electrons from the valence band to the conduction band of InSb. A semiconductor with a high electron density in the conduction band has a high reflectivity for light, comparable to a metal. The electron density in the conduction band can be further increased by using an n-doping material, for example selenium or tellurium, for doping of the semiconductor material, which allows to increase the reflectivity factor to an appropriate value for use with the optical storage medium 1.

In a preferred embodiment, an InSb layer with a thickness of 20nm and a refractive index of n=3,3-i*2.7 at 400nm is used as the nonlinear layer, to which a dielectric layer having a thickness of 22nm and a refractive index of 3,3 is added for providing the active layer 4 as an antireflective layer with a thickness of lambda/4. For a calculation of the reflectivity, a simulation with the software tool Mathematica has been performed. The reflectivity of a 20nm InSb layer as such is 33% at low power, when no other layers are present. When using this 20nm InSb layer within a perfectly matched antireflective layer, the calculated reflectivity is below 0.01% for the active layer 4.

For the calculation of the optical disc, realistic values are taken into account in that the reflectivity increases from 33% to 80% for a single InSb layer and increases from 0% to 55% when the InSb layer is included as a nonlinear layer within an antireflective layer 4. For the tracks of the data layer, a random distribution of all sizes of pits and lands is taken into account.

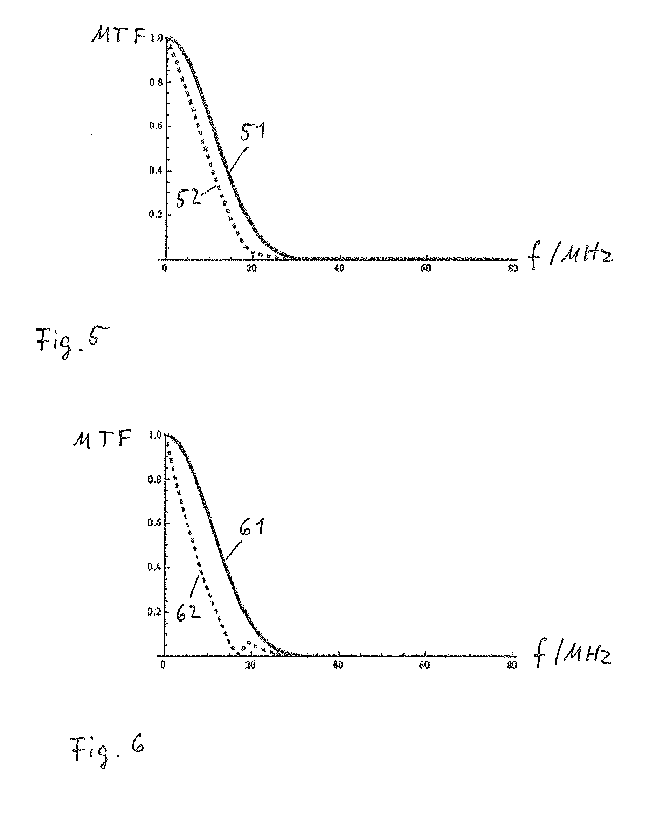

The resulting modulation transfer functions MTF as a function of the frequency f in MHz are shown in figure 5. The solid line 51 is the result for the InSb layer being included within an antireflective layer. The dashed line 52 relates to the single InSb layer. As can be seen, in particular the high frequency range between 20 and 30 MHz is improved for the disc with the antireflective layer, graph 51, with regard to the single InSb layer, which frequency range relates to the smallest pits and lands of the assumed data layer. The cut-off frequency for the single InSb layer, graph 52, is already at 20 MHz.

When using a phase-change material as the nonlinear layer 4b, the modulation transfer function MTF is even improved, as shown in figure 6. The dashed line 62 shows the MTF of a single nonlinear layer, for which a destructive interference occurs between pits and lands having a size being below the optical resolution limit and pits and lands having a size above the optical resolution limit, as described in G. Pilard, C. Féry, L. Pacearescu, H. Hoelzmann, S. Knappmann: Study of Super-Resolution ROM Disc with a Semiconducting or a Chalcogenide Masking Layer, Jpn.J.Appl.Phys., 40, (2009), 03A064. When a phase-change layer is included in an active layer being designed as an antireflective layer, the resulting MTF, solid line 61, does not show any destructive interference. In particular the dip at 17 MHz can be avoided by using an antireflective layer in accordance with the invention.

For the calculation of the modulation transfer functions of figures 5 and 6, different numerical apertures NA have been taken into account, because the reflected light 16 coming from the small center area 13 of the focus spot 14 includes higher scattering angles with regard to the reflected light of the larger outside area 15, as shown in figure 2, due to diffraction effects.

Because the center area 13 of the focused laser spot is sensitive to radial shifts relative to the pits of a corresponding track, a push-pull tracking signal can be provided by the pickup even when a reduced track pitch is used being below the diffraction limit of lambda/2NA = 238 nm of the pickup for reading of the data. This is only possible, if the reflected light intensity from the outside area is smaller than the reflected light intensity of the center area. Otherwise, the reflected light intensity of the outside area would completely cover the weak push-pull signal as obtained from the reflected light of the center beam. The focus of a blue laser diode is limitited by the diffraction limit to a focus spot of 238 nm. In accordance with the invention, a reduced effective focus spot is provided corresponding with the center area 13 of focus spot 14.

The foregoing embodiments and accompanying drawings are merely illustrative, but not limitative, and also other embodiments of the invention are within the scope of a person skilled in the art without departing from the spirit and scope of the present invention. The invention recites therefore in the claims herein after appended.

## Claims

1. Optical storage medium comprising
a substrate layer (2),
a data layer (3) with data arranged in tracks on the substrate layer (2), and
a thermal layer (4a) and a nonlinear layer (4b) disposed on the data layer (3), wherein the nonlinear layer (4b) comprises a super-resolution material having an increased reflectivity when irradiated with a laser beam, **characterized in that**
the thermal layer (4a) and the nonlinear layer (4b) constitute an active layer (4) being arranged as an anti-reflective layer.

2. The optical storage medium of claim 1, wherein the optical storage medium is essentially transparent for light intensities being below the super-resolution threshold of the super-resolution material.

3. The optical storage medium of claim 2, wherein the optical storage medium has a transmission factor of at least 50%.

4. The optical storage medium of claim 1, 2 or 3, wherein the active layer (4) has an optical thickness of lambda/4 +/- 20%, lambda being a laser wavelength of a pickup for reading data on the optical storage medium.

5. The optical storage medium of one of the preceding claims, wherein the thermal layer (4a) is arranged between the nonlinear layer (4b) and the data layer (3), or wherein the nonlinear layer (4b) is arranged between the thermal layer (4a) and the data layer (3).

6. The optical storage medium of one of the preceding claims, wherein the thermal layer is a dielectric layer (4a) or a metallic layer.

7. The optical storage medium of claim 5 or 6, wherein the active layer (4) comprises a second thermal layer being a dielectric or a metallic layer (4c) and wherein the nonlinear layer (4b) is sandwiched between the first and second thermal layers (4a, 4c).

8. The optical storage medium of one of the preceding claims, wherein the layers (4a, 4b, 4c) of the active layer (4) have the same refractive index within a range of +/- 10%, or within a range of +/- 25%.

9. The optical storage medium of one of the preceding claims, wherein the super-resolution material comprises a semiconductor material, in particular one of the III-V semiconductor family, for example GaSb or an indium alloy like InAs or InSb.

10. The optical storage medium of one of the preceding claims 1-8, wherein the super-resolution material comprises a phase-change material, for example a chalcogenide material like GeSbTe or AgInSbTe.

11. Optical storage medium of one of the preceding claims, wherein the optical storage medium comprises tracks having a track pitch being below the diffraction limit of lambda/2NA of a corresponding pickup for reading of the data, NA being a numerical aperture of the pickup.

12. Optical storage medium of one of the preceding claims, wherein the optical storage medium does not include a reflective layer.

13. The optical storage medium of one of the preceding claims, wherein the reflectivity factor of the optical storage medium is below 10% for light intensities being below the super-resolution threshold of the super-resolution material.

14. Optical storage medium of one of the preceding claims, comprising a cover layer (7) above the active layer (4) and a dielectric layer (6) arranged between the active layer (4) and the cover layer (7), the storage medium being designed for operation with a laser beam penetrating first the cover layer (7).

15. The optical storage medium of one of the preceding claims, wherein the optical storage medium is an optical disc, and wherein the data layer (3) is a read-only data layer with a pit structure.
